# EUROPEAN PATENT APPLICATION

(11) **EP 2 674 041 A1**
(43) Date of publication of application: **18.12.2013**
(21) Application number: 13170912.3
(22) Date of filing: 06.06.2013
(51) Int. Cl.: A23P 1/10, A22C 7/00, A22C 17/00, A22C 25/18, B29C 33/34

(54) **Apparatuses for producing food products from fish and chicken shims and associated systems and methods**

(30) Priority: 13.06.2012 US 201213495799
(71) Applicant: American Seafoods Group LLC, Seattle, WA 98121 (US)
(72) Inventor: Vieira, Michael F., Acushnet, MA 02743 Massachusetts (US); Moreau, Brett, Fairhaven, MA 02719 Massachusetts (US); Brodeur, Mark A., Cuttyhunk, MA 02713 Massachusetts (US); Myatt, Bob, Rochester, MA 02770 Massachusetts (US)
(74) Representative: Teall, Charlotte

(57) **Abstract**

Food processing apparatuses and associated methods are disclosed herein. In one embodiment, a fish processing apparatus (10) includes two sets of shim magazines (20a, 20b) on the opposite sides of mold(s) for making food products. Food shuttles (114) alternate in transporting food shims from their corresponding shim magazines (20a, 20b) to a position under the mold(s). An actuator (30) presses the mold(s) against the food shim to form food products. The force of the mold(s) can be controlled to improve separation of the food products from the food shim. Formed food products fall on a conveyor (112), which transports them away from the apparatus (10) for further processing.

## Description

### TECHNICAL FIELD

The present technology relates generally to commercial food processing and, more particularly, to food processing machines configured to produce food products from incoming food shims and associated systems and methods.

### BACKGROUND

Conventional methods of manufacturing food products from food shims generally include either manual or mechanized cutting operations whereby a food product is produced from an incoming food shim. Such food shims are typically shaped as a tablet or a fillet. During processing, the food shims are separated (e.g., via stamping, cutting, etc.) into a number of smaller food products having a desired size and shape. The food products can then be further processed and/or packaged.

### BRIEF DESCRIPTION OF THE DRAWINGS

Figure 1 is a perspective view of a food product processing apparatus configured in accordance with an embodiment of the present technology.

Figure 2 is an enlarged perspective view of a shim magazine assembly configured in accordance with an embodiment of the present technology before installation of the assembly with the apparatus of Figure 1.

Figure 3 is an enlarged perspective view of two food shims on a food shuttle configured in accordance with an embodiment of the present technology before installation of the food shuttle with the apparatus of Figure 1.

Figure 4 is a perspective view of a mold for use with the apparatus of Figure 1 in accordance with an embodiment of the present technology.

Figure 5 is a perspective view of a food shim wiper configured in accordance with an embodiment of the present technology.

Figure 6 is an enlarged perspective view of the food shim wiper of Figure 5 assembled with the food product processing apparatus in accordance with an embodiment of the present technology.

Figure 7 is an enlarged perspective view of a shock reduction mechanism of the apparatus of Figure 1.

### DETAILED DESCRIPTION

The present technology is generally directed toward food processing machines configured to produce food products having desired sizes and shapes from incoming food shims and associated systems and methods. In particular, embodiments of the present technology are directed to food processing machines having improved throughput and accuracy compared to conventional food processing devices. For example, one embodiment of a food product processing apparatus configured in accordance with an embodiment of the present technology includes a first food shuttle assembly on a first side of the apparatus and a second food shuttle assembly on a second, opposite side of the apparatus. The first and second food shuttle assemblies are configured to be loaded with food shim(s) for processing. The apparatus further includes an actuator assembly and a mold operably coupled to the actuator assembly. The actuator assembly is configured to press the mold against individual food shims with a desired, predetermined force to stamp/cut the food shims into a number of food products having a desired size and shape. The first and second food shuttle assemblies are configured to operate in a coordinated fashion to enhance throughput of the apparatus such that, during operation, the apparatus is configured to process a number of food shims continuously or almost continuously.

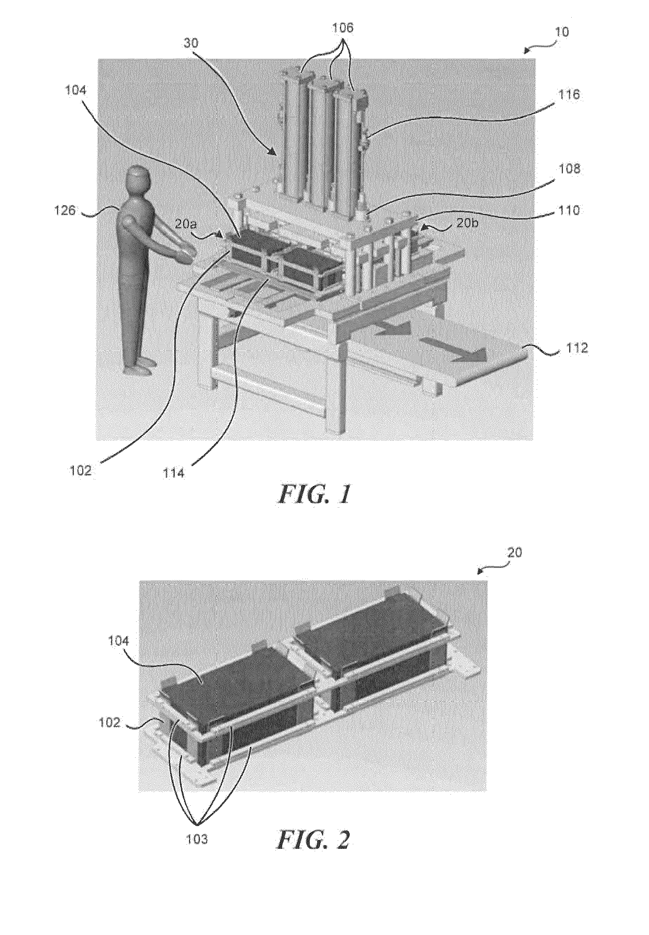

Specific details of certain embodiments of the technology are set forth in the following description and in Figures 1-7 to provide a thorough understanding of such embodiments. One skilled in the art, however, will recognize that the technology can be practiced without one or more specific details explained in the following description. Moreover, although the following disclosure sets forth several embodiments of the technology, other embodiments of the technology can have different configurations or different components than those described in this section. As such, it should be understood that the technology may have other embodiments with additional elements or without several of the elements shown and described below with reference to Figures 1-7.

### A. Embodiments of Food Product Processing Apparatuses and Associated Systems and Methods

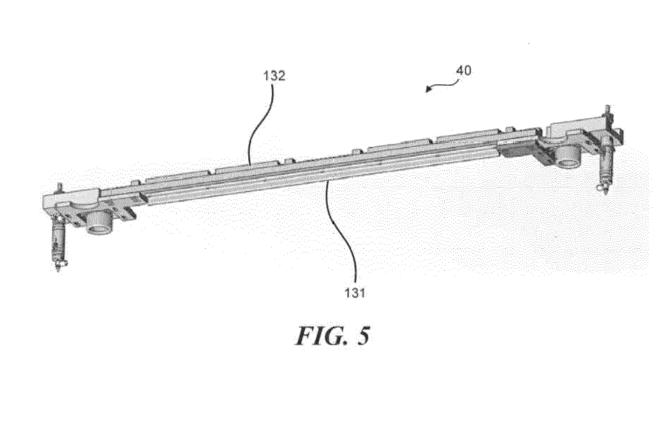

Figure 1 is a perspective view of a food product processing apparatus 10 configured in accordance with an embodiment of the present technology. The apparatus 10 includes a first shim magazine assembly 20a on a first side of the apparatus 10 and a second shim magazine assembly 20b on a second, opposite side of the apparatus 10. The apparatus 10 in the illustrated embodiment further includes food shuttle(s) 114 (only one is shown) under the corresponding shim magazine assemblies 20a and 20b to receive one or more food shims and transfer the shims under a mold (not visible in Figure 1; described below with reference to Figure 5) for processing. The apparatus 10 also includes an actuator assembly 30 configured to engage the mold and drive the mold into contact with the food shims for processing. A conveyor 112 can carry the processed food products away from the apparatus 10 for further processing and/or packaging.

Figure 2 is a perspective view of one of the shim magazine assemblies 20 before installation of the assembly with the apparatus 10. In this embodiment, the shim magazine assembly 20 can include two shim magazines 102 configured to house vertically stacked food shims 104 (e.g., fish, chicken, etc.). Although two shim magazines 102 are shown per shim magazine assembly 20, it will be appreciated that the shim magazine assemblies 20 may have a different number of shim magazines 102. The shim magazines 102 may have an adjustable perimeter to accommodate food shims of different sizes. For example, a perimeter of each shim magazine 102 can be adjusted using adjustable bars 103 that are configured to define the width/depth of the shim magazine 102 via attachment to a shim magazine frame at different points along the adjustable bar 103. In one particular embodiment, for example, the shim magazines 102 may be expanded up to a 10" +/- 0.25" x 19" +/- 0.25" size. In other embodiments, however, the shim magazines 102 may have different dimensions and/or arrangements. In the illustrated embodiment, the food shims 104 have a rectangular shape. In other embodiments, however, other shapes are possible (e.g., generally arcuate shapes, raw fish fillet shapes, etc.). In some embodiments, the shims 104 can have a thickness of approximately 0.3" to 0.5". In other embodiments, however, the shims may have other thicknesses.

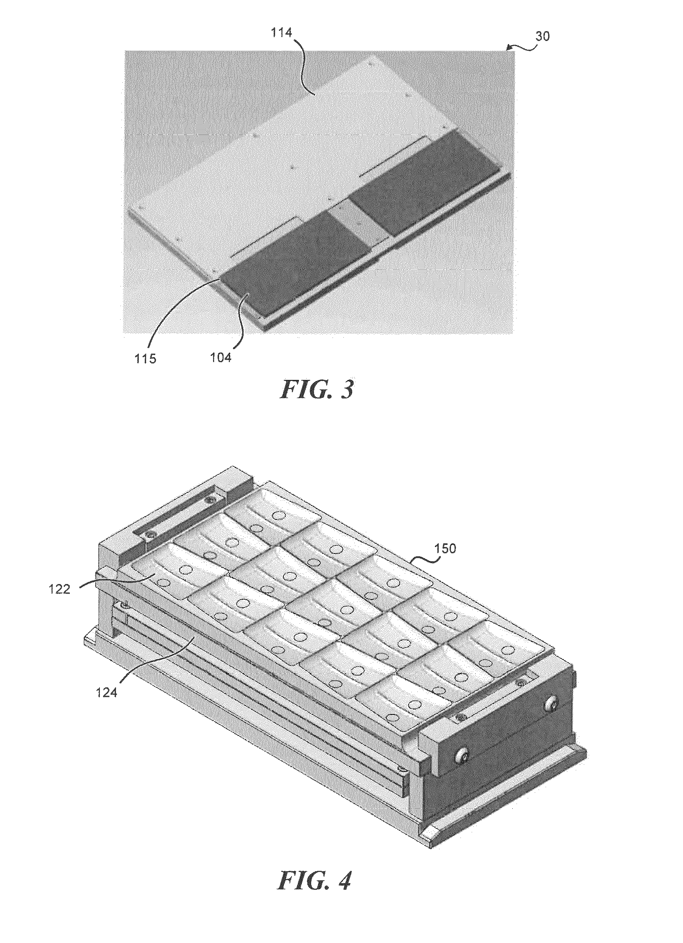

Figure 3 is a perspective view of an embodiment of the food shuttle 114 before installation of the food shuttle 114 with the apparatus 10. The food shuttle 114 can have one or more lips 115 for registering the food shims 104. The food shuttle 114 can be made of stainless steel or other FDA compliant materials. As noted above, during operation the food shuttle 114 is configured to deliver the food shims 104 from the shim magazines 102 to a processing area proximate the mold for processing. The food shuttle 114 can also serve as the mold stamping surface. In some embodiments, for example, a replaceable sacrificial plastic or soft alloy surface (not shown) can be added to a harder base material of the food shuttle 104 to preserve the surface of the mold.

Referring back to Figure 1, the actuator assembly 30 can include one or more air cylinders 106 (three air cylinders 106 are shown in the illustrated embodiment). As noted above, the actuator assembly 30 is configured to deliver a predetermined force to the mold (not shown) to stamp/cut the food shims 104. The three air cylinders 106 may work in tandem with a single mold, or there may be separate molds attached to each of the cylinders. In some embodiments, hollow portions of the machine frame 110 may be used for compressed air storage, thus reducing the size of the dedicated compressed air tanks. It will be appreciated that in other embodiments the actuator assembly 30 may have a different number of air cylinders 106 and/or the air cylinders 106 may have a different arrangement. Furthermore, hydraulic cylinders or electro-motors can be used in addition to, or in lieu of, the air cylinders 106.

In some embodiments, force and/or speed of the mold can be controlled while pressing against the food shim 104 for additional control of the product throughput. The speed and/or force applied by the mold to the food shims 104 via the actuator assembly 30 can be controlled, for example, via pressure of the air in the air cylinders 106, flow control of the air supplied to the air cylinders 106, current in the electro-motors, or other suitable means known to the person of skill in the art. In one embodiment, for example, a pressure regulator 116 may be used to control the pressure in the air cylinders, and thereby fixing a force applied by the mold to the target food shims 104. In some embodiments, for example, the actuator assembly 30 may be configured to deliver up to 60 tons of force via the mold to the target food shims 104. In other embodiments, however, the actuator assembly 30 may be configured to apply a different amount of force. Furthermore, in some embodiments, the maximum stroke of the air cylinders 106 may be limited to a certain travel distance such that the mold only travels a predetermined distance relative to the food shims 104. In additional embodiments, the mold 150 may be only return after a certain amount of force has been reached. One advantage of the actuator assembly 30 in the illustrated embodiment is that by applying a known, predictable force to the food shims via the mold, it is expected to assure cutting of the food shims 104 into fully separated food products and result in consistent shaping of the food products.

Figure 4 is a perspective view of a mold 150 for use with the apparatus 10 of Figure 1 in accordance with an embodiment of the present technology. Referring to Figures 1 and 5 together, for example, the illustrated mold 150 includes several mold pockets 122 for shaping food products when the mold 150 applies pressure to the food shims 104. As explained above with reference to Figure 1, pressure exerted by the mold 150 onto the food shims 104 may be precisely controlled by exerting a predetermined, known force via the actuator assembly 30. This feature enables selection of a suitable mold pressure/force for a particular food shim thickness and type, and is expected to result in accurately shaped and sized food products. The mold 150 may also include a changeover plate 124 to help ease replacement of one set of mold pockets 122 with another set. Further, if food products remain stuck to the mold 150, they can be removed either by the operator or with a suitable ejector assembly (not shown). It will be appreciated that the mold 150 shown in Figure 4 is merely one example of a suitable mold for the apparatus 10, and that a variety of other molds having different configurations and/or features may be used with the apparatus 10.

Referring back to Figure 1, in operation, one or more operators 126 (only one is shown) can add or remove food shims 104 to the shim magazine assemblies 20a and 20b. The operator(s) 126 may control the food product processing machine 10 using, for example, a touch screen operator interface (not shown) or other suitable mechanisms. The food shuttle(s) 114 receives the food shims 104 and transfers them under the mold 150 (not visible in Figure 1). When the proper location of the food shuttle 114 under the mold is confirmed by the machine controls, the mold is driven (by the actuator assembly 130) toward the food shims 104 on the food shuttle 114. As described above, the force of the mold shapes and/or cuts the food shims 104 into food products. The processed food products may then be dropped onto the conveyor 112 for transportation away from the apparatus 10, as indicated by the arrows on the conveyor 112. The conveyor 112 may be a moving belt conveyor or another suitable conveyor assembly (e.g., chain conveyors, shock conveyors, or pneumatic conveyors).

Figure 5 is a perspective view of a food shim wiper 40 configured in accordance with an embodiment of the present technology. The food shim wiper 40 can include a first side having a wiper blade 131 and a second side opposite the first side including one or more stoppers 132. Referring to Figures 1 and 5 together, during operation the food shim wiper 40 can be lowered and raised in synchronization with the travel of the mold and food shuttles 114 to assure that food residue is removed off the food shuttles 114 via the wiper blade 131. For example, the food residue may be removed as the food shuttle 114 is retracted toward its position underneath its respective shim magazine 102. Additionally, while the food shim wiper 40 is in its lower position, the stopper(s) 132 on the opposite side of the food shim wiper 40 can act as a stop position for the food shims 104 coming into position underneath the mold 150 (Figure 4). In other embodiments, however, the food shim wiper 40 may include other features and/or may have a different arrangement.

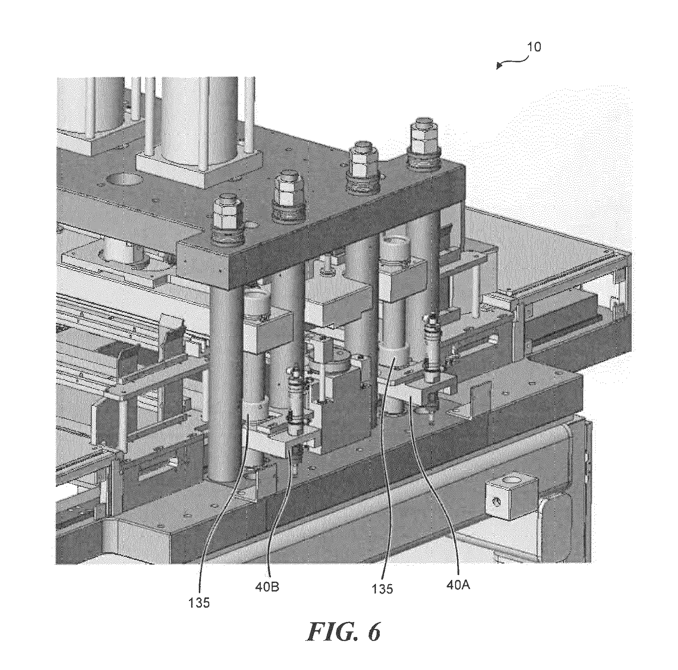

Figure 6 is an enlarged perspective view of first and second food shim wipers 40A and 40B, respectively, assembled with the food product processing apparatus 10 in accordance with an embodiment of the present technology. As noted above with reference to Figure 5, motion of the food shim wipers 40A and 40B can be synchronized during operation with the travel of the mold and food shuttles. In some embodiments, for example, the food shim wipers 40A and 40B may be raised and lowered using shim wiper actuators 135. It will be appreciated that although two food shim wipers 40A and 40B are illustrated in the present embodiment, a different number of food shim wipers may be possible depending on, among other things, the number of food shuttles 114 (Figure 1) included with the apparatus.

In some embodiments, travel of the food shuttles 114 associated with the first and second shim magazine assemblies 20a and 20b may be synchronized such that, for example, at one stroke of the mold, a first food shuttle 114 presents food shim(s) 104 underneath the mold, while a second food shuttle (not visible in Figure 1; at the second or distal side of the apparatus 10) receives additional food shim(s) for processing. In the subsequent stroke of the mold, the roles of the first and second food shuttles reverse; that is, the first food shuttle 114 returns back under the shim magazine 102 of the first shim magazine assembly 20a to receive new food shims 104, while the second food shuttle 114 presents its food shims 104 to the mold for processing. Such synchronization of the mold stroke with loading/travel of the food shuttles 114 is expected to significantly improve throughput of the food processing machine 10 and allow the apparatus 10 to continuously or almost continuously process food products during operation without downtime.

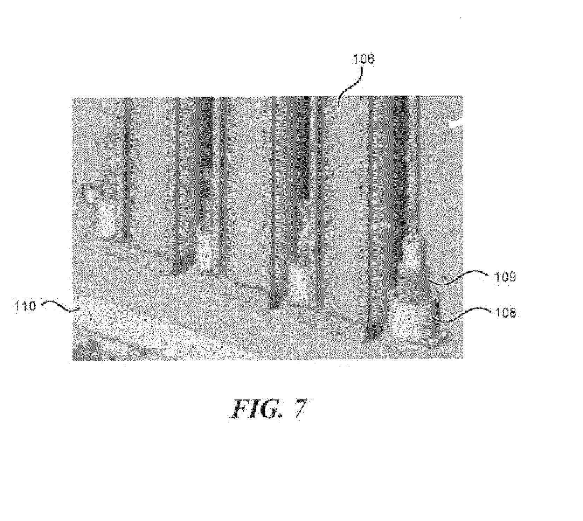

Figure 7 is an enlarged perspective view of a shock reduction mechanism 108 of the apparatus 10. In this embodiment, the shock reduction mechanism 108 is carried by the machine frame 110 and configured to engage with the actuator assembly 30 to help reduce shocks during operation. In some embodiments, for example, the shock reduction mechanism 108 may include one or more springs 109 coupled with an energy dissipating element (not shown). The spring 109 may be, for example, a Belleville coil spring, a leaf spring, or another suitable spring. One advantage of the shock reduction mechanism 108 is that it allows the apparatus 10 to operate at higher speed, thereby increasing throughput and minimizing downtime. The shock reduction mechanism 108 is an optional component that may not be used in some embodiments.

The food product processing apparatus 10 shown and described herein offers several advantages over conventional devices. For example, one concern with many conventional techniques for manufacturing food products is a mismatch between the speed of the cutting or stamping operations and the pace at which the food shims are supplied. Consequently, one part of the machine waits for the other part to finish a process step during operation. In contrast with conventional techniques, embodiments of the food processing apparatuses disclosed herein alternately bring food shims under the mold for processing such that when one food shuttle is under the mold, the other food shuttle loads the next food shim or shims for the processing. Immediately upon processing of the first food shim(s), the second food shim(s) can be presented for processing while the empty food shuttle is being loaded for another cycle. This feature is expected to significantly improve throughput as compared with conventional apparatuses.

Another concern with many conventional food processing devices is that stamping or cutting operations should be accurate enough to completely separate food products from food shims, while not damaging the resulting food products. This balance is often difficult to achieve using conventional techniques that have specific overtravel/undertravel limits for the mold and corresponding actuator assembly. Furthermore, different sizes and shapes of incoming food shims and the required food product can require equipment adjustments and changeovers which further reduce the throughput. In contrast with conventional techniques, however, the apparatus 10 described above, which is configured to apply a predetermined speed and/or force to the mold during each cycle to stamp/cut the food shims, is expected to assure consistent and accurate processing of the desired food products, and thereby increase throughput.

### B. Conclusion

The above detailed descriptions of embodiments of the technology are not intended to be exhaustive or to limit the technology to the precise form disclosed above. Although specific embodiments of, and examples for, the technology are described above for illustrative purposes, various equivalent modifications are possible within the scope of the technology, as those skilled in the relevant art will recognize. For example, although the discussion herein is directed to processing food shims, the apparatuses described herein may be used to process shims composed of other materials (e.g., polymers, etc.) Further, while steps are presented in a given order, alternative embodiments may perform steps in a different order. The various embodiments described herein may also be combined to provide further embodiments.

From the foregoing, it will be appreciated that specific embodiments of the technology have been described herein for purposes of illustration, but well-known structures and functions have not been shown or described in detail to avoid unnecessarily obscuring the description of the embodiments of the technology. Where the context permits, singular or plural terms may also include the plural or singular term, respectively.

Moreover, unless the word "or" is expressly limited to mean only a single item exclusive from the other items in reference to a list of two or more items, then the use of "or" in such a list is to be interpreted as including (a) any single item in the list, (b) all of the items in the list, or (c) any combination of the items in the list. Additionally, the term "comprising" is used throughout to mean including at least the recited feature(s) such that any greater number of the same feature and/or additional types of other features are not precluded. It will also be appreciated that specific embodiments have been described herein for purposes of illustration, but that various modifications may be made without deviating from the technology. Further, while advantages associated with certain embodiments of the technology have been described in the context of those embodiments, other embodiments may also exhibit such advantages, and not all embodiments need necessarily exhibit such advantages to fall within the scope of the technology. Accordingly, the disclosure and associated technology can encompass other embodiments not expressly shown or described herein.

The invention will now be described by reference to the following clauses:
1. An apparatus, comprising:
   a first shim magazine assembly configured to receive one or more food shims;
   a second shim magazine assembly configured to receive one or more food shims;
   a mold;
   a first food shuttle configured to transport one or more food shims from the first shim magazine assembly to a processing area proximate the mold;
   a second food shuttle configured to transport one or more food shims from the second shim magazine to the processing area; and
   an actuator assembly operably coupled to the mold and configured to deliver a predetermined force to the mold and press the mold against the one or more shims in the processing area,
   wherein, during operation, the first shim magazine assembly and the second shim magazine assembly are configured to alternately present food shims to the processing area.
2. The apparatus of clause 1 wherein the actuator assembly comprises at least one air cylinder.
3. The apparatus of clause 2, further comprising at least partially hollowed machine frame configured to store compressed air for the at least one air cylinder.
4. The apparatus of clause 1, further comprising a shock reduction mechanism operably coupled to the actuator assembly.
5. The apparatus of clause 2 wherein the actuator assembly comprises at least two air cylinders, and wherein the at least two air cylinders operate in tandem.
6. The apparatus of clause 1, further comprising a conveyor positioned to receive processed food products from the processing area.
7. The apparatus of clause 1 wherein the mold further comprises a changeover plate for replacing mold pockets.
8. The apparatus of clause 1 wherein the first and second shim magazine assemblies comprise one or more shim magazines, and wherein each shim magazine comprises adjustable bars for configuring a size of the corresponding shim magazine.
9. A method of making food products, the method comprising:
   transferring a first food shim from a first shim magazine to a first food shuttle;
   presenting the first food shim on the first food shuttle to a mold;
   pressing the mold against the first food shim with a predetermined force to make at least one food product from the first food shim;
   transferring a second food shim from a second shim magazine to a second food shuttle;
   presenting the second food shim on the second food shuttle to the mold; and
   pressing the mold against the second food shim with a predetermined force to make at least one food product from the second food shim,
   wherein transferring the second food shim coincides at least partially with presenting the first food shim and pressing the mold against the first food shim.
10. The method of clause 9 wherein:
   the first food shuttle is positioned generally under the first shim magazine for at least a partial duration of transferring the first food shim from the first shim magazine, and
   the second food shuttle is positioned generally under the second shim magazine for at least a partial duration of transferring the second food shim from the second shim magazine.
11. The method of clause 9 wherein pressing the mold against the food shim with a predetermined force is controlled, at least in part, by controlling air pressure in one or more air cylinders operably coupled to the mold.
12. The method of clause 11, further comprising storing compressed air for the one or more air cylinders in a frame of the apparatus.
13. The method of clause 11, further comprising coupling one or more air cylinders to a shock damper.
14. The method of clause 11 wherein one or more air cylinders are configured to operate in tandem.
15. The method of clause 9 wherein the shims are configurable to receive different sizes of the food products.
16. The method of clause 9 wherein presenting the second food shim on the second food shuttle coincides at least in part to retreating the first food shuttle back to the first shim magazine.
17. The method of clause 9 wherein the food shims are composed, at least in part, of fish.
18. An apparatus, comprising:
   first means for holding one or more food shims;
   second means for holding one or more food shims;
   a mold;
   first means for transporting the one or more food shims from the first means for holding food shims to a processing area proximate the mold;
   second means for transporting the one or more food shims from the second means for holding food shims to the processing area; and
   means for delivering a predetermined force to the mold and pressing the mold against the one or more food shims in the processing area,
   wherein, during operation, the first means for transporting and the second means for transporting are configured to alternately present food shims to the processing area.
19. The apparatus of clause 18, further comprising a shock reduction mechanism operably coupled to the means for delivering the predetermined force to the mold.
20. The apparatus of clause 19 wherein the shock reduction mechanism comprises one or more springs coupled with an energy dissipating element.

## Claims

1. An apparatus, comprising:
a first shim magazine assembly configured to receive one or more food shims;
a second shim magazine assembly configured to receive one or more food shims;
a mold;
a first food shuttle configured to transport one or more food shims from the first shim magazine assembly to a processing area proximate the mold;
a second food shuttle configured to transport one or more food shims from the second shim magazine to the processing area; and
an actuator assembly operably coupled to the mold and configured to deliver a predetermined force to the mold and press the mold against the one or more shims in the processing area,
wherein, during operation, the first shim magazine assembly and the second shim magazine assembly are configured to alternately present food shims to the processing area.

2. The apparatus of claim 1 wherein the actuator assembly comprises at least one air cylinder.

3. The apparatus of claim 2, further comprising at least partially hollowed machine frame configured to store compressed air for the at least one air cylinder.

4. The apparatus of claim 1, further comprising a shock reduction mechanism operably coupled to the actuator assembly.

5. The apparatus of claim 2 wherein the actuator assembly comprises at least two air cylinders, and wherein the at least two air cylinders operate in tandem.

6. The apparatus of claim 1, further comprising a conveyor positioned to receive processed food products from the processing area.

7. The apparatus of claim 1 wherein the mold further comprises a changeover plate for replacing mold pockets.

8. The apparatus of claim 1 wherein the first and second shim magazine assemblies comprise one or more shim magazines, and wherein each shim magazine comprises adjustable bars for configuring a size of the corresponding shim magazine.

9. A method of making food products, the method comprising:
transferring a first food shim from a first shim magazine to a first food shuttle;
presenting the first food shim on the first food shuttle to a mold;
pressing the mold against the first food shim with a predetermined force to make at least one food product from the first food shim;
transferring a second food shim from a second shim magazine to a second food shuttle;
presenting the second food shim on the second food shuttle to the mold; and
pressing the mold against the second food shim with a predetermined force to make at least one food product from the second food shim,
wherein transferring the second food shim coincides at least partially with presenting the first food shim and pressing the mold against the first food shim.

10. The method of claim 9 wherein:
the first food shuttle is positioned generally under the first shim magazine for at least a partial duration of transferring the first food shim from the first shim magazine, and
the second food shuttle is positioned generally under the second shim magazine for at least a partial duration of transferring the second food shim from the second shim magazine.

11. The method of claim 9, wherein pressing the mold against the food shim with a predetermined force is controlled, at least in part, by controlling air pressure in one or more air cylinders operably coupled to the mold, and further comprising storing compressed air for the one or more air cylinders in a frame of the apparatus.

12. The method of claim 9, wherein pressing the mold against the food shim with a predetermined force is controlled, at least in part, by controlling air pressure in one or more air cylinders operably coupled to the mold, and wherein one or more air cylinders are configured to operate in tandem.

13. The method of claim 9 wherein the shims are configurable to receive different sizes of the food products.

14. The method of claim 9 wherein presenting the second food shim on the second food shuttle coincides at least in part to retreating the first food shuttle back to the first shim magazine.

15. The method of claim 9 wherein the food shims are composed, at least in part, of fish.
